# EUROPEAN PATENT APPLICATION

(11) **EP 1 115 262 A1**
(43) Date of publication of application: **11.07.2001**
(21) Application number: 99310353.0
(22) Date of filing: 21.12.1999
(51) Int. Cl.: H04Q 7/36

(54) **Traffic location in mobile cellular telecommunications systems**

(71) Applicant: LUCENT TECHNOLOGIES INC., Murray Hill, New Jersey 07974-0636 (US)
(72) Inventor: Ahmed, Mustafa, Swindon, Wiltshire SN5 9TU (GB); Hurley, Tim David, Swindon, Wiltshire SN4 7DX (GB); Martin-Leon, Silvia, Swindon, Wiltshire SN5 9GD (GB)
(74) Representative: Williams, David John

(57) **Abstract**

In order to automate the process of locating "hot-spots" in an exisiting mobile cellular telecommunications system, with a view to installing new BTS, a method for assessing traffic density comprises:
providing a test transmitter (8), and moving it to one or more selected sites (S1... Sj) within existing cells (2,N) of the system; the transmitter transmitting test signals to mobile stations (6) within its vicinity, the mobile stations within the vicinity transmitting first signal strength response signals to said test signals, and said mobile stations transmitting second signal strength response signals to corresponding test signals from base stations (4, 4N) of associated cells;
and analysing received first and second response signals for assessing traffic density within the vicinity of the transmitter, comprising analysing the received first signal strength response signals to determine those first response signals which are greater than a predetermined threshold value, and comparing those first response signals which are greater than a predetermined threshold value with the second signal strength response signals to determine the value of the first response signals in relation to the second response signals.

## Description

The present invention relates to the location of traffic, in particular regions of increased traffic density, in mobile cellular telecommunications systems.

When a new network operator is licensed and the network designed, the radio base stations are usually planned on the basis of providing maximum coverage with relatively low traffic capacity. In this way, the new service is made available to the maximum number of possible consumers, as rapidly as possible, while minimising the initial capital outlay. The radio network planning at this stage is satisfactorily performed with a combination of manual field strength surveys from test transmitters, and automatic coverage prediction and frequency assignment software.

Once the new network's subscriber base grows, it becomes necessary to add traffic capacity, often in the form of additional base station sites. It is at this stage that it is necessary to identify areas of traffic congestion, and target the provision of new base station sites in these areas. Thus, the location of regions of increased traffic density or "hot spots" is an important problem, particularly for the siting of base transceiver stations (BTS) to accommodate the traffic. Many such "hot spots" can be identified by careful analysis of geographical/morphological data and good knowledge of the area. However, there remains a great interest in the automation of such process.

It is an object of the present invention to provide a method and means for automatically assessing the traffic density in geographical regions in a mobile cellular telecommunications system.

In a first aspect, the present invention provides a method for assessing traffic density in a mobile cellular telecommunications system, the method comprising:
providing a test transmitter means, and moving it to one or more selected sites within existing cells of the system;
the transmitter means, at the or each site, transmitting test signals to mobile stations within its vicinity,
the mobile stations within the vicinity transmitting first response signals to said test signals, and said mobile stations transmitting second response signals to corresponding test signals from base stations of associated cells;
and analysing received first and second response signals for assessing traffic density within the vicinity of the transmitter means.

In a second aspect, the present invention provides apparatus for assessing traffic density in a mobile cellular telecommunications system, comprising:
a test transmitter means, movable to one or more selected sites within existing telecommunications cells and arranged to transmit test signals to mobile stations within its vicinity; which mobile stations are arranged to transmit first response signals to said test signals;
and means for analysing received first response signals, in addition to received second response signals to corresponding test signals from base stations of associated cells, for assessing traffic density within the vicinity of the transmitter means.

The present invention is particularly preferred for use with the GSM system, but other systems may be employed for example UMTS, AMPS, TACS, NMT, etc.. In the specification below, where acronyms are used without an explanation, they have the meaning assigned to them by the relevant ETSI standards for the GSM system.

In accordance with the invention, a transmitter of low power is used, so that only mobile stations (MS) in the vicinity of the transmitter detect the signal. The nature of the test signal will naturally depend on the type of mobile system in which the invention is used, since the test signals must be compatible with those received by existing base transceiver stations (BTS). As preferred, the test signal is such that the mobile stations make signal strength reports, constituting said first response signals, at regular intervals of the type used for handover operations between cells. However the response signals may comprise other parameters, as for example the signal delay between signals transmitted from a BTS and received by a mobile station.

The present invention may be used for different purposes:
"hot spot" detection, in order to identify the best location for micro cells (typically 100m-200m radius) or pico cells (typically 50m radius).
Global traffic map generation, in order to predict congestion problems and plan cost effective capacity enhancements.
Interference area location, as part of the network optimisation process.
Global interference map generation, which could then be used in automatic frequency planning tools.

In a preferred form of the present invention, a mobile base transceiver station (BTS) is used to assess the traffic in its small coverage area. The mobile BTS is located in the area under study with a small coverage area (low transmit power). For accuracy the coverage area is checked, via drive test or field strength prediction tools to determine the likely size of cell. Then the traffic generated in that area is measured.
There are three ways of measuring the traffic:
1. If the mobile BTS is an active cell in the network, the traffic can be measured using OMC ( operation & maintenance centers) counters.
2. The mobile BTS is an active cell but the "Directed Retry" feature is activated for it. From the OMC a report is retrieved to review the total number of MS being diverted to other cells for further call establishment.
3. The mobile BTS is a passive cell, i.e. broadcasts in one frequency but it is barred so that it cannot accept calls. The BTS is set as neighbouring cell of the surrounding cells so that mobiles measure its signal (to do that mobile stations need to decode the FCCH and SCH (frequency correction and synchronisation channels), so a dummy transmitter is not possible), that is then reported to the BSC (base station controller). Analysis of measurements allows discrimination of traffic that is generated in the foot print of the BTS.

Thus in accordance with the invention, for solutions 1 and 2, the test transmitter constitutes the serving cell for mobile stations, and said associated cells constitute the neighbouring cells of the serving cells. For solution 3 however, said associated cells constitute the cell serving the mobile stations and neighbouring cells of the serving cell.

The first solution is quite complex because base station parameters such as handover thresholds and neighbour lists have to be configured, not only for the micro base station, but for the surrounding ones, and they might require new tuning every time the mobile station is moved. With the first and second solutions, there is the added complexity of needing a way to connect the base station to its BSC, probably via microwave links. This might be completely impossible in some situations and is in general impractical.

Therefore, the third solution is preferred. In addition to the passive mobile BTS, for measurement recording, an A_{bis} protocol analyser is preferably used. This is a standard diagnostic and analysis device for connecting in the A_{bis} interface between the BTS and BSC. Alternatively any suitable analysis equipment may be employed.

This third solution is very well suited to identify the best possible location for micro or pico cells in the case of "hot spot" relief, especially if the area under consideration has been limited using preliminary manual techniques. Further, it permits the invention to be implemented with a minimum of additional equipment, requiring merely a test transmitter, a protocol analyser, and software for analysing the results provided by the protocol analyser.

As preferred, said method for analysing test results comprises analysing a first set of test results to determine those first response signals which are greater than a predetermined threshold value, and analysing a second set of test results to compare those first response signals which are greater than a predetermined threshold value with the second response signals to determine the value of the first response signals in relation to the second response signals.

In a third aspect, the present invention provides a method, , for assessing traffic density in a mobile cellular telecommunications system, by analysing test results obtained from a test procedure involving a test transmitter making test transmissions, and mobile stations within its vicinity making first response signals to said test transmissions, and second response signals to corresponding transmissions made by the base stations of associated cells,
received versions of the first response signals constituting a first set of test results and received versions of the second response signals constituting a second set of test results,
said method for analysing test results comprising analysing said first set of test results to determine those first response signals which are greater than a predetermined threshold value,
and analysing said second set of test results to compare those first response signals which are greater than a predetermined threshold value with the second response signals to determine the value of the first response signals in relation to the second response signals.

In a fourth aspect, the invention provides apparatus, for assessing traffic density in a mobile cellular telecommunications system, by analysing test results obtained from a test procedure involving a test transmitter making test transmissions, and mobile stations within its vicinity making first response signals to said test transmissions, and second response signals to corresponding transmissions made by the base stations of associated cells,
received versions of the first response signals constituting a first set of test results and received versions of the second response signals constituting a second set of test results,
said apparatus comprising means for analysing said first set of test results to determine those first response signals which are greater than a predetermined threshold value, and
means for analysing said second set of test results to compare those first response signals which are greater than a predetermined threshold value with the second response signals to determine the value of the first response signals in relation to the second response signals.

In a preferred embodiment, received versions of the first and second response signals are forwarded from base stations to a BSC, and an A_{bis} protocol analyser analyses the response signals to determine for each MS making responses whether a first response signal is present in a predetermined number, say 6, of the response signals having the largest values. If present, the first response signal is compared with a threshold value, usually the minimum acceptable field strength value, and then compared with the signal strength reported by the BTS of the serving cell to determine which is greater. A correction value is added to account for the smaller power of the test transmitter relative to the BTS. If greater than the serving BTS, the first response signal is compared with the signal strengths reported by neighbouring cells, to determine whether the first response signal has the greatest value and can therefore be classified as "best server".

### Brief Description of the Drawings

A preferred embodiment of the invention will now be described with reference to the accompanying drawings, wherein:
Figure 1 is a schematic plan illustrating the method of the invention;
Figure 2 is a view of an interface of the analysis software of the present invention and
Figures 3 to 7 are flow charts illustrating the analysis method of the present invention.

### Description of the Preferred Embodiment

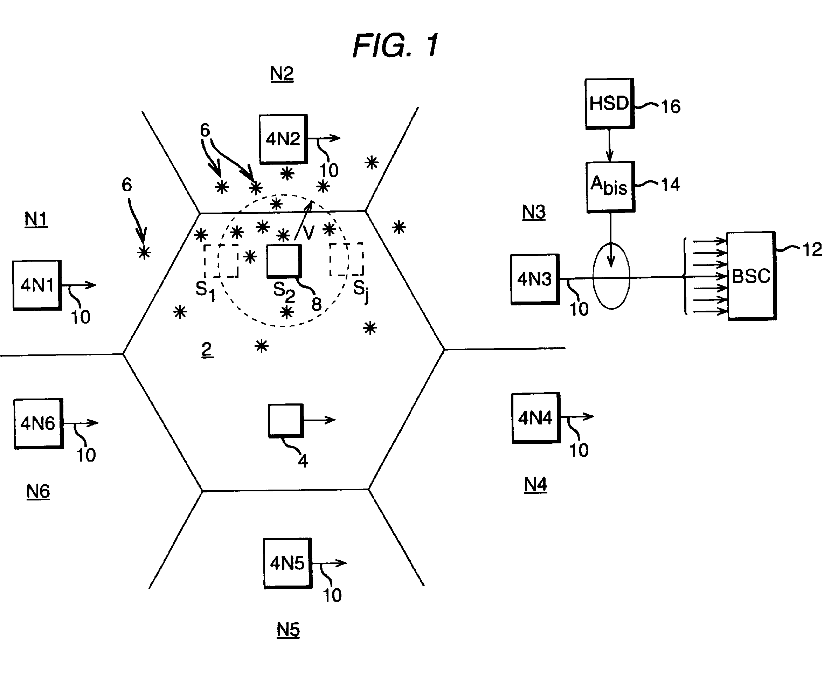

Referring to Figure 1 of the drawings, a GSM mobile telecommunications system comprises an array of cells, including a cell 2 served by a Base Transceiver Station (BTS) 4, with neighbouring cells N1- N6 served by respective BTS 4N1- 6. Mobile stations (MS) 6 are indicated by star shapes. As shown the mobiles are concentrated in a region overlapping cells 2 and N2. A mobile test transmitter 8 simulating the transmissions of a GSM BTS is moved to a number of positions S1 ... Sj within cells 2 and N2 where localised areas of high traffic density ('hot spots') are thought to exist, but their precise location is unknown. Although the test transmitter 8 sends GSM compatible broadcast signals, it is barred from receiving calls. Transmitter 8 has a low power in relation to BTS 4, etc, and has a range indicated by circle V, extending about 1 km in its vicinity. The MS 6 in its vicinity report the signal level that they receive from the test transmitter, together with measurements from neighbouring cells, to their serving cell.

The received signal strength of the test transmitter, as reported by MS in the vicinity, and sent to their serving BTS, are then forwarded via 2Mb/s circuits 10 of the A_{bis} interface to the Base Station Controller (BSC) site 12. These measurement reports are intercepted on the 2Mb/s circuits, and recorded by an A_{bis} protocol analyser 14 (this is a standard commercially available item from a variety of suppliers).

The intercepted measurement reports are analysed by HSD (Hot Spot Detector) software 16, and the position of the test transmitter which, if it were to be replaced by a BTS, would serve the most traffic, can be calculated.

Prior to commencing the measurement report analysis, an initial test procedure is carried out to manually identify likely areas of localised traffic congestion, where it may be feasible to deploy an additional cell. This activity is based on a combination of the following techniques: location of existing BTSs that become congested during busy hours; visual inspection of maps showing areas of increased usage, e.g. shopping centres.; comparison of above maps with coverage predictions from existing BTS sites, etc.

Once an initial attempt has been made to identify hot spot locations, a number of possible test positions are identified. Several test positions S1 ... Sj are selected within each of the broad hot spot areas manually identified above. One at a time, at each of the test sites, test transmitter 8 is installed. The preferred test transmitter 8 is small, lightweight, battery powered, and can use an integral antenna; it is normally easy to use at the majority of test sites. At sites that require an output power no more than 0.5W, the test transmitter can be mounted on a lightweight tripod, and the internal antenna and battery used. If greater output power is required, an external power amplifier can be used together with an external antenna system. At sites where greater antenna heights are required, either a transportable mast or rooftop location can be used.

In order to record measurement results, the test transmitter 8 is positioned at the first test site S1 and switched on. The A_{bis} Protocol Analyser 14 is set recording data for a period that is typically of the order of half an hour. As the data is recorded, the measurement results are displayed on the A_{bis} Protocol Analyser screen, and a visual check made that the test transmitter is being satisfactorily received. Once A_{bis} Protocol Analyser Files have been recorded for one test site, the test transmitter is moved to the next site S2, and another A_{bis} Protocol Analyser file recorded for the same period of time. For each of the test sites in the coverage area, the data is recorded during the periods of greatest traffic load. Although a data recording time of around half an houris usual, the time needed is dependent on the test site and type of hot spot area, for example train/bus station or air/sea port, etc.

The test transmitter 8, the source for the dummy BTS transmissions, to simulate different possible BTS locations, has the following specification:
Integral antenna, with external antenna connector (45-55Ω),
Internal battery, with run time >1Hr,
Optional external DC PSU,
Transmit power 0.1-0.5W, +/- 2.5dB
Operating frequency, three different units for *either,*
935-960MHz, *or*,
1805-1880MHz, *or,*
1930-1990MHz.
Transmits GSM channels,
Frequency Correction Channel (FCC),
Synchronisation Channel (SCH),
Broadcast Control Channel (BCCH).

### Configuration

Although the test transmitter configuration will, to some extent, be dependent on the settings and channel assignment used in the existing mobile network, the basic test transmitter set-up is given below.

Frequency Correction Channel (FCCH),
The Absolute Radio Frequency Channel Number (ARFCN) is set to a channel that the existing network operator is licensed to use, and is not simultaneously in use in the vicinity of the test site.

Synchronisation Channel (SCH),
The SCH carries the Base Station Identity Code (BSIC),
It comprises two octal digits, First, the Network Colour Code (NCC) which is set to that of the existing network, Second, the Base station Colour Code (BCC) which can be set to a number that identifies it from the surrounding base stations in the test area.

Broadcast Control Channel (BCCH),
The BCCH carries the Global Cell Identity (GCI) number that is comprises two elements, Cell Identity (CI), Location Area Identity (LAI), that is itself formed from three numbers:
Mobile Country Code (MCC), Mobile Network Colour Code (MNCC), and Location Area Code (LAC),
Transmit Power,
The test transmitter output power is set according to the coverage range that is required, and the type of external power amplifier that may be used,
The output power takes a value within the range +20 to +27dBm (+/-2.5dB),
The required transmit power can be estimated by:

Identifying the test area,
Using coverage prediction software (and field strength measurement results if available) to estimate the field strength that is received in the test area from the existing cells in the vicinity,
Using coverage prediction software (and field strength measurement results if available) to estimate the field strength that is received in the test area from the test transmitter, and raise it to such a level that it is the strongest signal in the test area.

Cell Access Barring,
The test transmitter is set as 'Barred', to prevent mobiles from attempting to use the cell, and thereby delay their access to the existing network.

Broadcast Control Channel (BCCH),
The System Information (SI) is transmitted on the BCCH,
If the BCCH is switched 'Off', then only the FCH and SCH are transmitted,
Provided that the 'Cell Barring' is set 'On', then the BCCH can be set 'On' for the purpose of the HSD test.

BCCH Allocation (BA) List,
The BA list is used to broadcast a list of the neighbour cells to the mobiles in the vicinity, This facility is not used for the HSD test, and the 'BA List' can be set 'Off'.

### Identification of Test Transmitter

It is necessary for the HSD software 16 to identify the received signal level measurement report from the test transmitter when it appears in the measurement reports of the neighbour cells, received by the mobiles in the vicinity of the test site.

The HSD software supports two means of test transmitter identification:
Using a unique Network Colour Code (NCC) element of the BSIC number assigned to the test transmitter, and entering it in the HSD software 'New Test Transmitter' dialogue box,
Entering the test transmitter 'BCCH_FREQ_NCELL(i)' value (associated with the ARFCN that is used by the test transmitter), in the HSD software 'New Test Transmitter' dialogue box.

### BSC 12 Software

The BSC software has to be configured such that the existing BTS in the test area broadcast the identification information relating to the test transmitter to mobiles in the area. For mobiles in the vicinity of the test transmitter to include signal level measurements for the test transmitter in their measurement reports to their serving cell, it is necessary for the test transmitter to be included as a neighbour cell in the BA list transmitted by the serving cell. This is achieved by making the following changes:
Create a new (dummy) BTS to represent the test transmitter, together with its associated Handover Control Object, and Power Control Object.
Modify the neighbour cell lists broadcast by the existing BTSs in the test area, to include the dummy BTS as a valid neighbour cell

### HSD Software 16

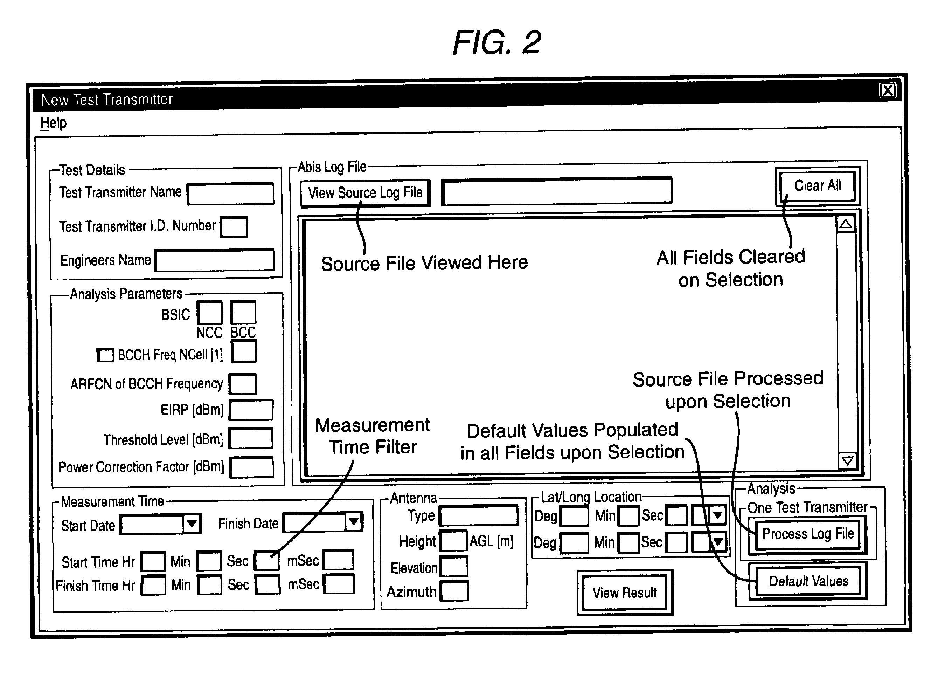

Referring to Figure 2, this shows one, the new test transmitter dialog, interface window, of various windows comprising the interface between the analysis software 16 and the user. The Test Transmitter dialog box comprises the following sections
Analysis Parameters:- User enters parameters that are used in the calculation..
Measurement Time:- User enters start and finish date of the test, as well as the start and finish time of the measurement. The start and finish time is used as a filter for the timestamp entries in the source Abis log file.
Antenna:- Antenna specific data is entered.
Lat. / Long. Location:- The user enters the latitude and longitude location of test transmitter. Process Log File Button:- Upon selection the source Abis Log File is processed.
Default Values Button:- Upon selection all dialog fields are populated with default values. View Result Button:- Upon selection the user is returned to the main interface window and can view the result of the current analysis.
View Source Log File Button:- Upon selection the source file is opened and printed in the dialog window.

The **Analysis Results Window** is where all the calculation results are presented to the user. This comprises the following:
**Output test file name:** - The path and directory of the output test transmitter output file. **%1**: - % of measurement report for which the test transmitter signal level was above the user defined threshold, as amended by the power correction factor
**Time 1**: - Total no. of Test Transmitter measurements above threshold x 0.48 Seconds. **%2**: - % of measurement report for which the test transmitter signal level was above the user defined threshold, as amended by the power correction factor, *and* is received as Best Server. Best Server is taken to mean Test Transmitter received at a higher level than the current server and all the neighbour cells.
**Time 2**: - Total no. of Test Transmitter measurements as Best Server, above threshold x 0.48 Seconds.
**TNM**: - Total Number of Valid Measurements.

The results are explained in the following table:

| **Parameter** | **Definition** |
|---|---|
| **Percentage of Test Transmitter RXLEV measurements above threshold** | The percentage of measurement that test transmitter has RXLEV above threshold. |
| **Call time in Test Transmitter RXLEV measurements above threshold** | The call time that test transmitter has RXLEV above threshold. It is obtained by multiplying 0.48 seconds by the number of test transmitter RXLEV measurements that are above threshold. |
| **Percentage of Test Transmitter RXLEV measurements are the best server** | The percentage of measurement that test transmitter has the highest RXLEV among the serving cell and all other neighbour cell. |
| **Call time in Test Transmitter RXLEV measurements are the best server** | The call time that test transmitter is the best server. It is obtained by multiplying 0.48 seconds by the number of test transmitter measurements in which it is the best server. |

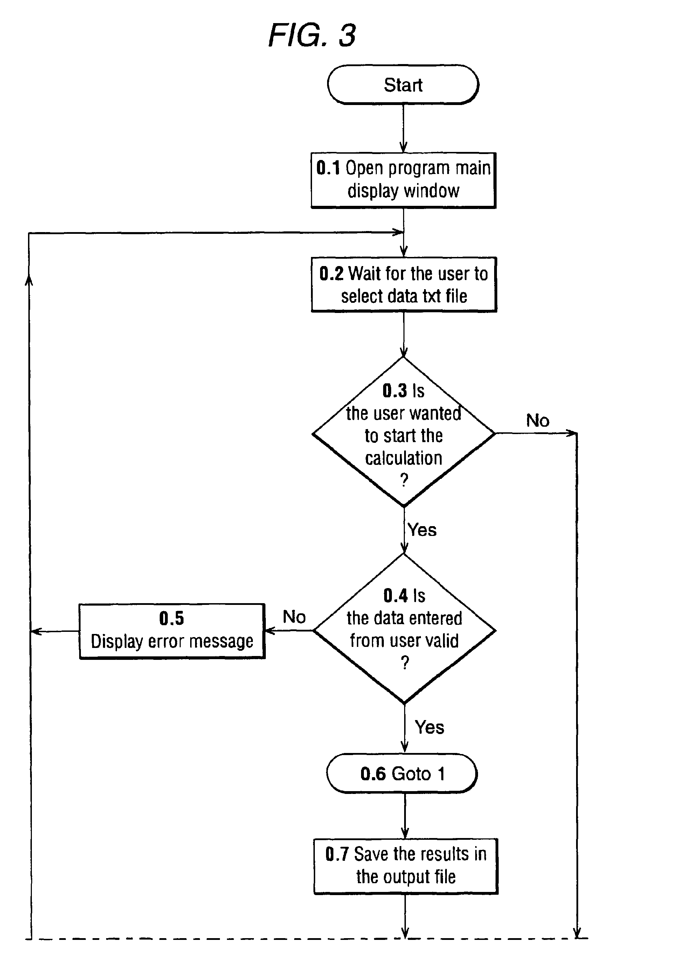

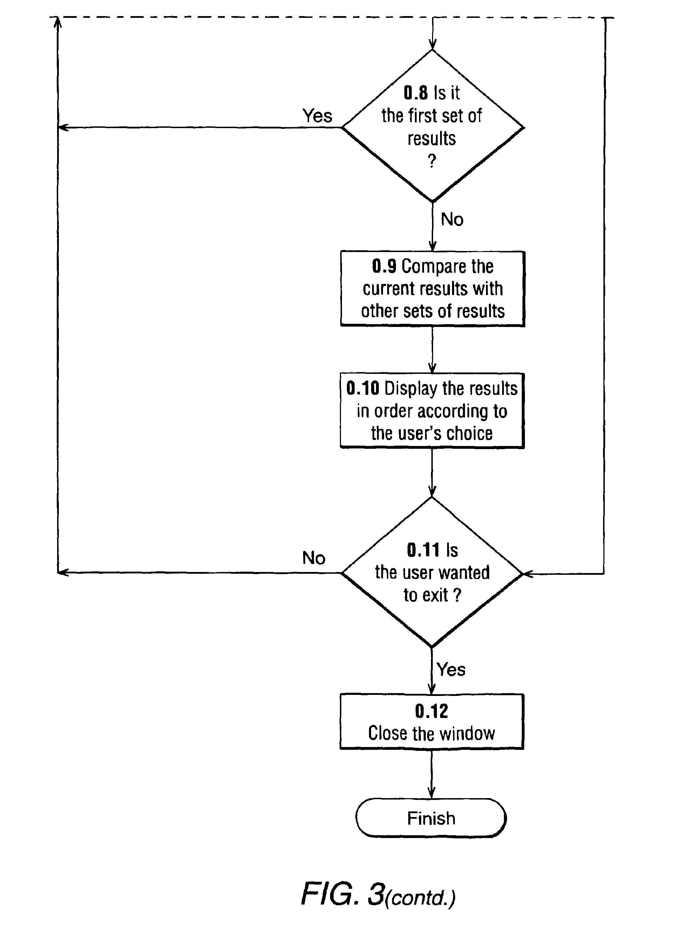

The HSD algorithm is depicted the the flow chart of Figures 3 to 7. There are two parts of the algorithm. The first part is the main frame of the software which is the user interface (including user input, calculation and results display), while the second part is the details of the calculation procedures. For the main frame of the algorithm, in order to start the Hot Spot calculation, users have to execute the file **HotSpot.exe.** Then the main window of the software will be displayed. This is the point where the main frame of the algorithm starts. The programme needs two inputs for the calculation, the A_{bis} file and the data entered from the user. Each calculation process will only calculate the result for one test transmitter measurement. This part of the algorithm is labelled from 0.1 to 0.10 in the flow chart of **Figure 3**, as follows:
**Step 0.1:** The main dialogue box of Hot Spot is displayed as the user runs the **HotSpot.exe** file.
**Step 0.2:** The programme waits for the user to input data. The user follows the instructions provided in the user manual and inputs the data required for the calculation, for example, the name of the A_{bis} measurement file, the threshold level, the power correction factor, and the start time and finish time.
**Step 0.3:** Once the user has filled in the required information, the calculation can be started. The program looks at the command that the user gave. If the user wants to start the calculation, the algorithm goes to step 0.4; otherwise, to step 0.9.
**Step 0.4:** The data entered from the user is checked. If the entered data is out of range or is missing, the algorithm goes to step 0.5; otherwise to step 0.6.
**Step 0.5:** Displays the error message.
**Step 0.6:** The program carries out the calculation using the selected measurement file and the information entered by the user. The detail of this procedure is shown in second part. The result are available for the next step.
**Step 0.7:** The result of the calculation, (the percentage of Test Transmitter RXLEV measurement above threshold, the percentage of Test Transmitter RXLEV measurement that it is the best server and the call time for each case) is saved in an output file. The output file also includes the user-entered data and the extracted data from the input file.
**Step 0.8:** If the user has to processed more than one Abis file, the results of these files are compared automatically. Therefore, if the result is the first set of output, the algorithm goes back to step 0.2; otherwise to step 0.7.
**Step 0.9:** The result of current set of measurement is compared with the pervious output data.
**Step 0.10:** The results of different test transmitter measurements are displayed in order according to user's choice. This could be in ascending or descending order of the percentage of Test Transmitter RXLEV measurement above threshold or the percentage of Test Transmitter RXLEV measurement that it is the best server.
**Step 0.11:** Again the program waits for the user's instruction, if the user wants to exit the application, step 0.10 is executed. Otherwise, the algorithm goes back to step 0.2.
**Step 0.12:** Exit the application and close the window.

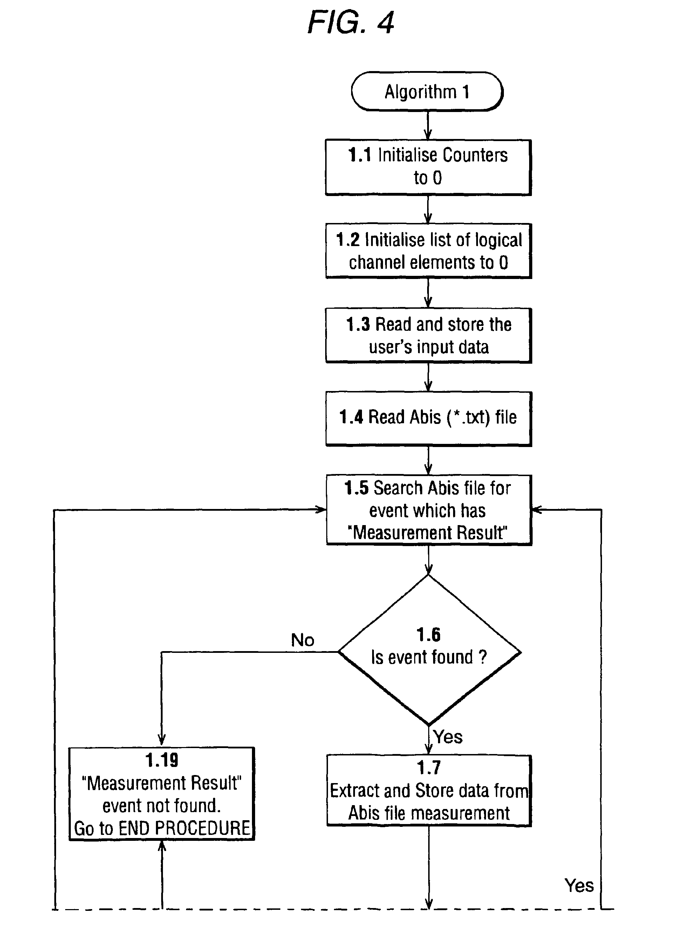

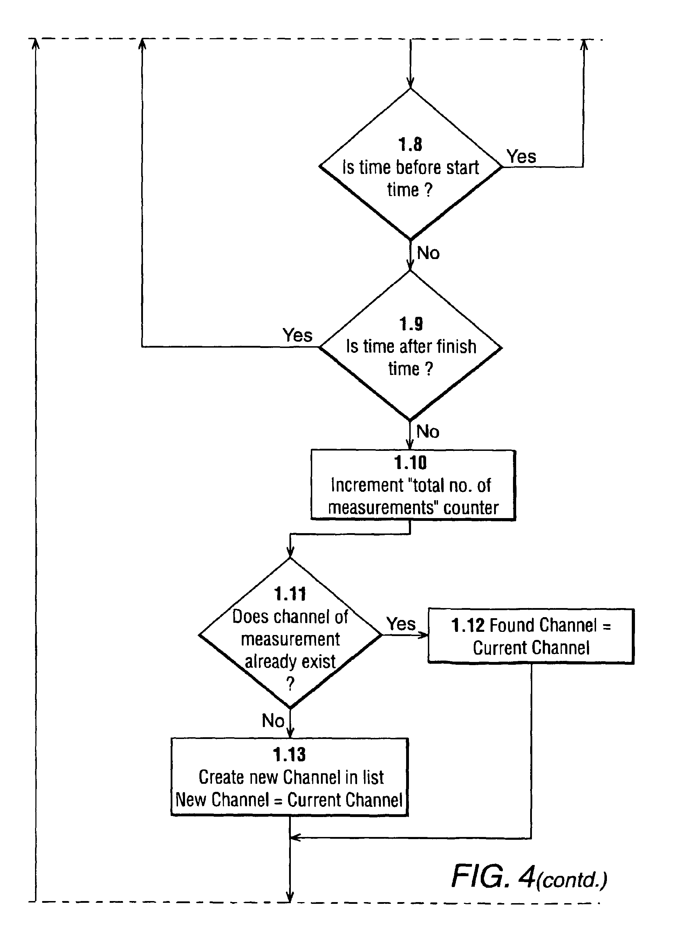

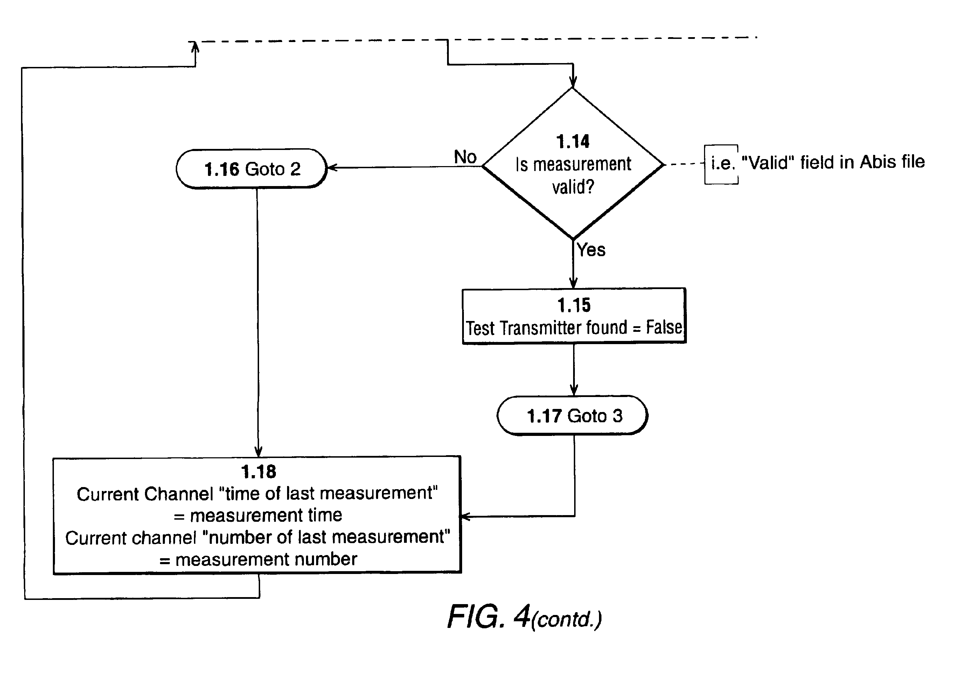

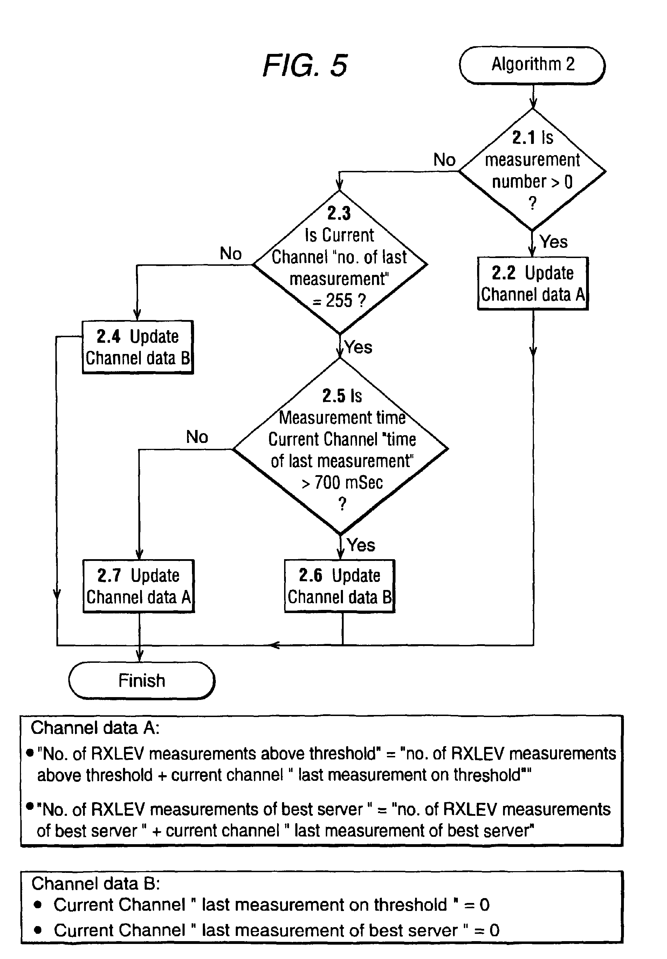

For the second part of the algorithm, this part of the algorithm is constructed for the calculation process. The data used in the calculation are extracted from the selected A_{bis} measurement file and the user entered data. Figure 4 is the main body of the calculation algorithm while Figures 5, 6 and 7 are the sub-procedures of the calculation algorithm. **Referring to Figure 4:**
**Step 1.1:** Initialise all counters to 0. The counters are 'Total no. of measurements', 'no. of RXLEV measurement above threshold' and 'no. of RXLEV measurement of best server'. **Step 1.2:** Initialise list of logical channel elements to 0. Each channel consists of five main elements, channel description, time of last measurement, number of last measurement, last measurement on threshold and last measurement of best server.

The channel description includes:
A_{bis} link (value from 1 to 4),
A_{bis} time slot (value from 00 to31) (each time slot represents data from one BTS),
A_{bis} sub-channel (value from 0 to 3),
Uₘ time slot (value from 1 to 7), (Uₘ is the air interface)
Uₘ channel type (Bm+ACCH or SACCH/8 or SACCH/4),
Uₘ sub-channel (if channel type is Bm+ACCH and the number does not appear, it should set to 0, otherwise value from 0 to7).
**Step 1.3:** Read the data entered from the user and store them in program variable.
**Step 1.4:** Read A_{bis} (^{*}.txt) file which is selected by the user.
**Step 1.5:** Search A_{bis} file for the event, 'Measurement Result'. The phrase 'Measurement Result' indicates the beginning of a new measurement, i.e. search for a new measurement.
**Step 1.6:** If event found then go to step 1.7, else got to step 1.19.
**Step 1.7:** Read and extract data from A_{bis} file measurement.

The extracted data consist of,
The measurement time,
The channel description,
The measurement number,
The DTX downlink status (DTX represents voice operated switch control for the MS),
The measurement valid,
The serving cell RXLEV (full and sub),
The top six neighbour cells information in terms of signal strength measurements. For each neighbour cell, the value of RXLEV, BCCH, NCC and BCC are recorded.
**Step 1.8:** If the measurement time is before the start time that specified by the user, then go back to step 1.5, otherwise go to step 1.9.
**Step 1.9:** If the measurement time is after the finish time that specified by the user, then go back to step 1.19, otherwise go to step 1.10.
**Step 1.10:** Step 1.8 and 1.9 ensured that the measurement is within the time period that is specified by the user. Therefore, increment 'total no. of measurements' counter.
**Step 1.11:** Check the Uₘ channel type of the channel description of the current measurement with the previous channel. If they are the same, this means that channel of measurement is already existing, and go to step 1.12. Otherwise, go to 1.13.
**Step 1.12:** Store the found channel information in the current channel.
**Step 1.13:** Create a new channel and store the information of the new channel in the current channel. The new channel has the same channel description as the measurement channel. Other channel parameters including time of last measurement, number of last measurement, last measurement on threshold and last measurement of best server are set to 0.
**Step 1.14:** Check the validation status of the measurement. If the measurement is valid, step 1.15 will be taken, otherwise, step 1.16 is the next step.
**Step 1.15:** The variable 'Test Transmitter' is set to FALSE.
**Step 1.16:** Goto 2, the sub procedure 2 is executed in the case that the measurement is Not Valid.
**Step1.17:** Goto 3, the sub procedure 3 is executed in the case that the measurement is Valid.
**Step 1.18:** The current channel 'time of last measurement' and 'number of last easurement' is set to 'measurement time' and 'measurement number' respectively.
**Step1.19:** 'Measurement Result' event not found means there are no more measurements. Therefore, go to the END PROCEDURE.

**Referring to Figure 5**, this algorithm is used to process the data if the measurement is Not Valid. In most cases, the reading of the previous measurement is used when a Not Valid measurement is found. However, if the not valid measurement has measurement number of 0 and the measurement time between the pervious and the current measurement is more than 700ms, then it will assume the test transmitter does not exist. **Step 2.1:** It checks the measurement number, if the measurement number is larger than 0, then step 2.2 is executed. If it is equal to 0, then it goes to step 2.3.
**Step 2.2:** Update Channel data A that is set the 'no. of RXLEV measurement above threshold' equal to the sum of 'no. of RXLEV measurement above threshold' and current channel 'last measurement on threshold'. Also set 'no. of RXLEV measurement of best server' equal to the sum of 'no. of RXLEV measurement of best server' and current channel 'last measurement of best server'. This step is virtually the same as repeating the reading of last measurement.
**Step 2.3:** It checks the measurement no. of the last measurement. If it is equal to 255 (same as if the current measurement no. equal to 0), step 2.5 is taken. If it is not, then step 2.4 is executed.
**Step 2.4:** Update Channel data B that is set both Current Channel 'last measurement on threshold' and 'last measurement of best server' to 0. This step simply assumes the test transmitter does not exist.
**Step 2.5:** It checks the time gap between the current and the previous measurement time. If it is greater than 700ms, step 2.6 is executed. Otherwise, step 2.7 is taken.
**Step 2.6:** The same as step 2.4.
**Step 2.7:** The same as step 2.2.

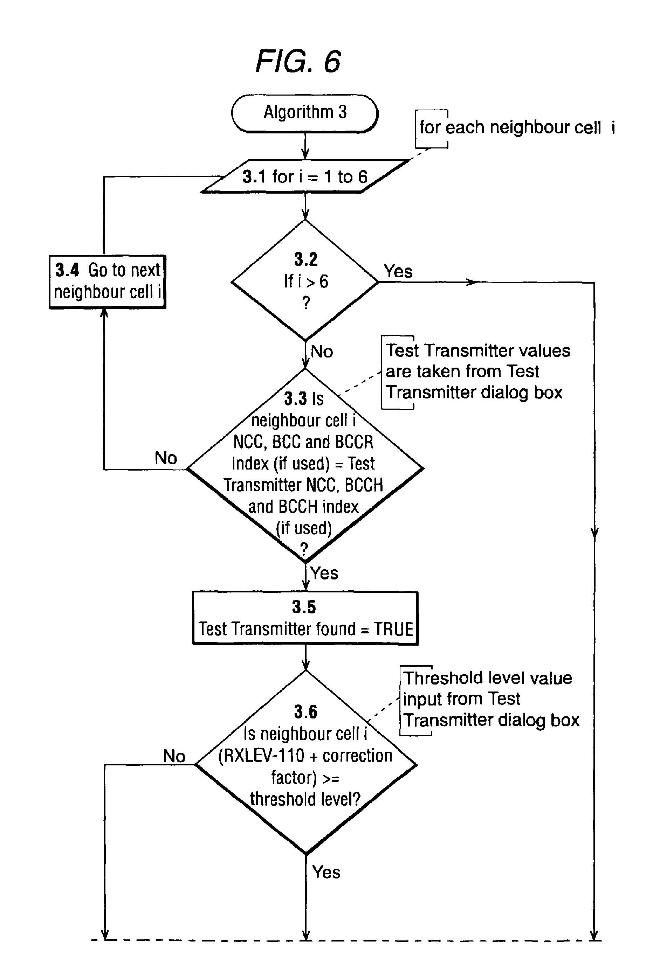

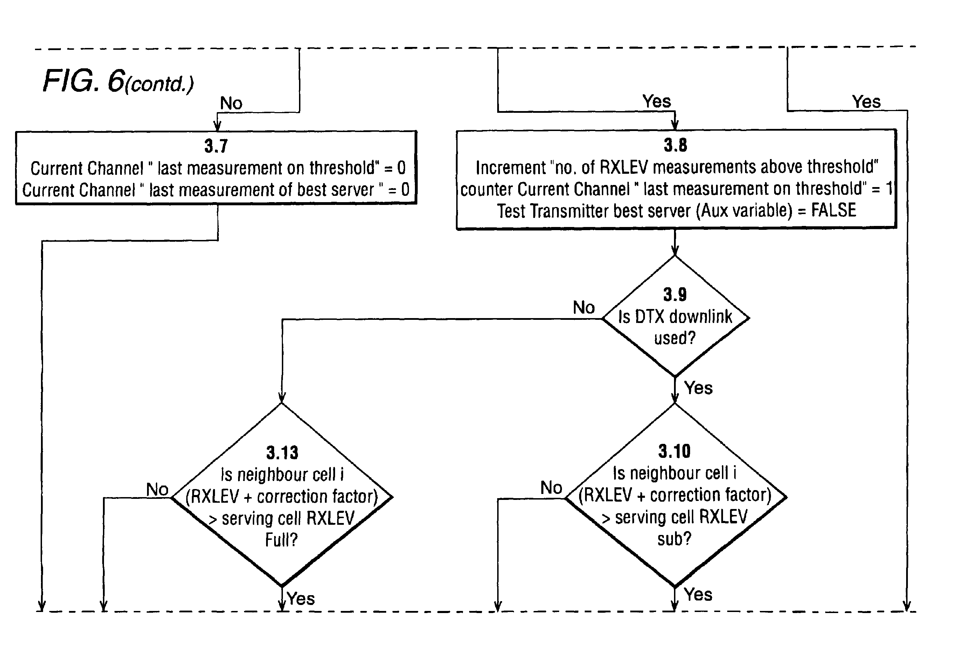

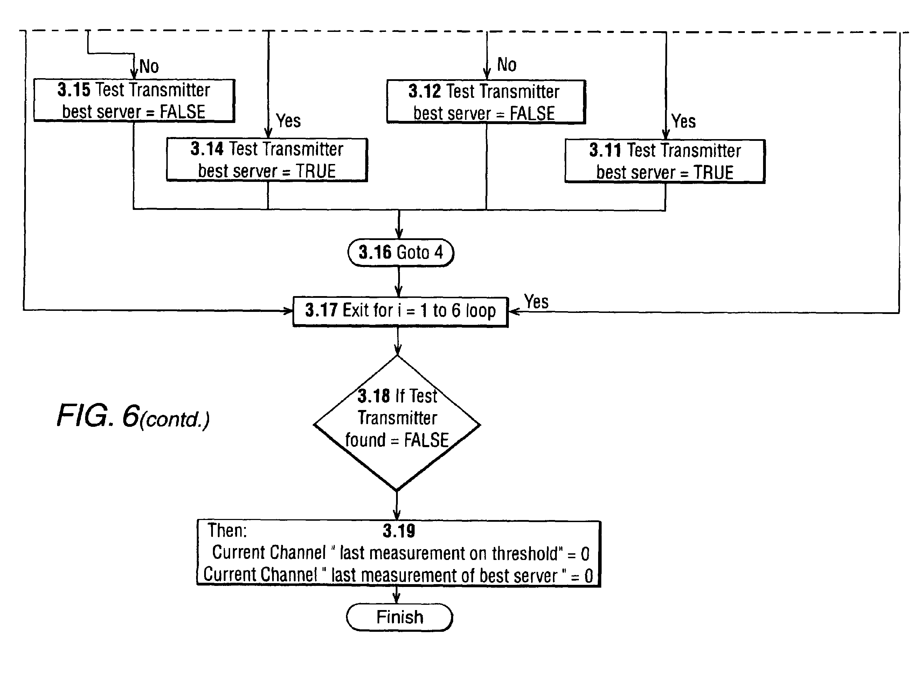

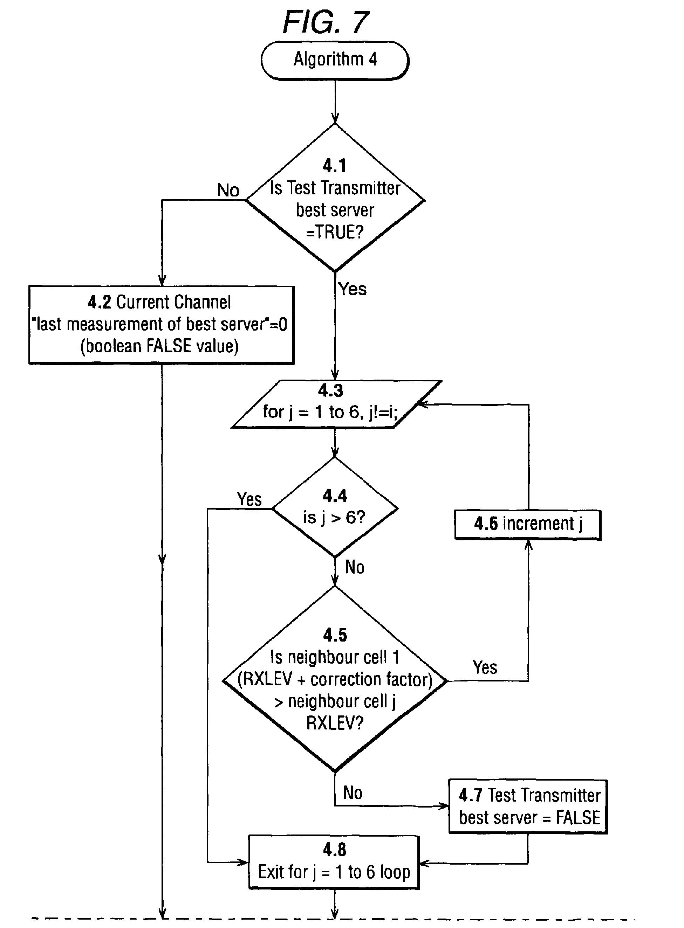

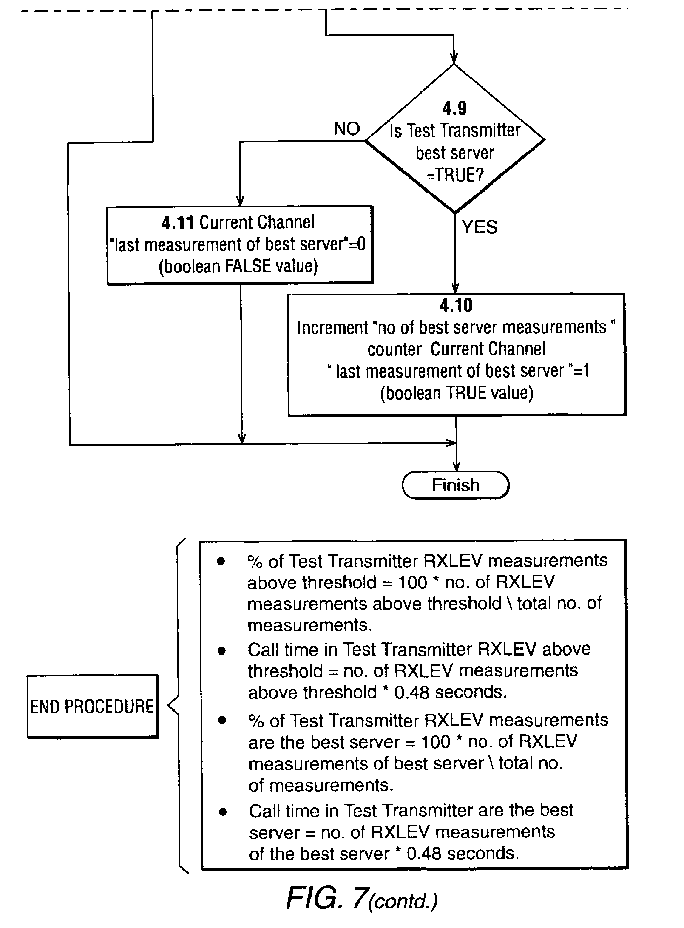

**Referring to Figure 6**, this part of the algorithm analyses the data of Valid measurement. The main function of this sub procedure is to search for the test transmitter in the neighbour cell list, then compare the MS RXLEV measurement from the test transmitter with the threshold level, usually set as the minimum acceptable level for satisfactory reception by MS in the vicinity. If it is above the threshold level, compare it with the RXLEV level of other neighbour cells and the serving cell (which is done in the sub-procedure of Figure 7). Since the test transmitter transmits at a lower power level than a BTS (0.5 Watt as compared with 30 Watts), a power correction factor is added to the RXLEV measurement on the test transmitter before any comparison take place. The user sets both threshold level and the correction factor.
**Step 3.1:** The beginning of a 'for' loop. It is the loop used to check if the test transmitter is in the top six of the neighbour cell list of the MS, i.e. the six neighbour cells with the highest RXLEV.
**Step 3.2:** When i>6, it means that the test transmitter is not in the top six of the neighbour cell list. Therefore, go to step 3.17, the exit stage of the loop.
**Step 3.3:** The NCC and BCC (the BSIC) and the BCCH index (if used) of the neighbour cells are checked. If they are the same as the test transmitter, this means the test transmitter is found and step 3.5 will be taken. If they are not the same, test transmitter is not found and step 3.4 will be taken.
**Step 3.4:** Since neighbour cell i is not the test transmitter, check the next neighbour cell on the list. Hence, increase the i counter by 1.
**Step 3.5:** Since the test transmitter is found, set the variable 'Test Transmitter found' to TRUE.
**Step 3.6:** It compares the RXLEV level of the neighbour cell i (test transmitter) with the threshold level. It notes that the correction factor is added onto the RXLEV value before it is compared with the threshold value. If the RXLEV value is higher than the threshold, goes to step 3.8. If it is lower, goes to step 3.7.
**Step 3.7:** Set both Current Channel 'last measurement on threshold' and 'last measurement of the best server' to 0. This is because the measured test transmitter RXLEV level is lower than the threshold and hence, it could not be the best server.
**Step 3.8:** The measured test transmitter RXLEV is higher than the threshold level, so increase the 'no. of RXLEV measurement above threshold' counter by one. For the same reason, set the current channel 'last measurement on the threshold' to 1. The test transmitter best server is set to FALSE.
**Step 3.9:** Before comparing the measured RXLEV of the test transmitter with the RXLEV of the serving cell, the status of the DTX downlink has to be known. If it is ON, the measured RXLEV of the test transmitter is compared with the serving cell RXLEV sub value that is done in step 3.10. If DTX is OFF, then the measured RXLEV of the test transmitter is compared with the serving cell RXLEV full value that is done in step 3.13.
**Step 3.10:** If the DTX downlink is ON, the serving cell RXLEV sub is used in the comparison between the RXLEV of the test transmitter and of the serving cell. If the RXLEV of the test transmitter is higher, step 3.11 is the next step, or else; step 3.12 is the next step.
**Step 3.11:** If the test transmitter has a higher RXLEV, set 'Test Transmitter best server' to TRUE.
**Step 3.12:** If the test transmitter has a lower RXLEV, set 'Test Transmitter best server' to FALSE.
**Step 3.13:** If the DTX downlink is OFF, so the serving cell RXLEV full is used in the comparison between the RXLEV of the test transmitter and of the serving cell. If the RXLEV of the test transmitter is higher, step 3.14 is the next step, or else; step 3.15 is the next step.
**Step 3.14:** Same as step 3.11.
**Step 3.15:** Same as step 3.12.
**Step 3.16:** Go to 4. The sub-procedure 4 is run to verify the test transmitter is the best server among other neighbour cells.
**Step 3.17:** The exit of the 'for' loop.
**Step 3.18:** It examines the status of the variable 'Test Transmitter found', if it is FALSE, i.e. no test transmitter is found, step 3.19 is the next step. If not, the algorithm will go to the finish step of the sub procedure.
**Step 3.19:** Same as step 3.7.

**Referring to Figure 7**, the aim of this sub-procedure is to examine the measured RXLEV of the test transmitter with other neighbour cells measured RXLEV. Again the correction factor is added on the RXLEV of test transmitter before carrying out any comparison.
**Step 4.1:** It makes sure that the 'Test Transmitter best server is equal to TRUE. If it is true, then goes to step 4.3, or else goes to step 4.2.
**Step 4.2:** If the test transmitter is not the best server, sets the 'last measurement of best server' to 0.
**Step 4.3:** The beginning of the 'for' loop. It is used to examine the RXLEV of the test transmitter with the rest of neighbour cells in the list.
**Step 4.4:** If j is larger than 6, exits the loop by going to step 4.8. Otherwise, goes to step 4.5.
**Step 4.5:** It compares the RXLEV of the test transmitter with the RXLEV of the neighbour cell j. If the test transmitter has a higher RXLEV, goes to step 4.5. Otherwise, goes to step 4.6.
**Step 4.6:** Increment j. Examine the next neighbour cell.
**Step 4.7:** If the test transmitter has a lower RXLEV, set the 'Test Transmitter best server' to FALSE.
**Step 4.8:** The exit of the 'for' loop.
**Step 4.9:** It tests the 'Test transmitter best server'. If it is TRUE, it means the test transmitter is the best server out of the serving cell and other neighbour cell. Goes to step 4.10. However, if it is FALSE, the test transmitter is not the best server and goes to step 4.11.
**Step 4.10:** Increment 'no. of best server measurement' counter and set current channel 'last measurement of best server' equal to 1.
**Step 4.11:** Set the current channel 'last measurement of best server' equal to 0. It is because the test transmitter in the measurement is not the best server.
The END PROCEDURE is the final step of the calculation part. The output of this procedure is the results that the user will be shown. The HSD software calculation algorithm produces four result values
The percentage of measurement reports within the analysis time window, for which the test transmitter received signal level (plus user entered power correction factor) is above the (user entered) signal level threshold.
The time in seconds, within the analysis time window, for which the test transmitter received signal level (plus user entered power correction factor) is above the (user entered) signal level threshold.
Each measurement report accounts for approximately 0.48s.
The percentage of measurement reports within the analysis time window, for which the test transmitter received signal level (plus user entered power correction factor) is
Above the (user entered) signal level threshold, *and,*
Is the best server (i.e. is received at a higher level than either the serving or neighbour cells). The time in seconds, within the analysis time window, for which the test transmitter received signal level (plus user entered power correction factor) is
Above the (user entered) signal level threshold, *and,*
Is the best server (i.e. is received at a higher level than either the serving or neighbour cells).

The following points should be considered when the HSD results are analysed.
The 'Call Seconds' values can only be used for comparison purposes if either:
The A_{bis} Protocol Analyser log files were recorded over the same length of time, and the whole file is analysed, or,
The HSD analysis time window is set to extract the same length of time from each A_{bis} Protocol Analyser log file, (provided that each log file is longer than the period used for the time window).
The 'Call Seconds' value can be used to gain a good indication of the volume of traffic that could be served from each test site.
The 'Percentage' value can be used to check how well the test site compares with the current serving site.
The 'Best Server' values can be used as an indication as to the extent to which traffic would be switched to the test site; however it should be borne in mind that:
The test transmitter EIRP, and Power Correction Factor must be set such that the test site is representative of an actual BTS installed at the site,
The power threshold level is set at the required received power level for the service area,
If the test transmitter antenna position is not the same as that of the intended BTS installation, the coverage will differ to some extent (even though the power correction factor may be applied).

Modifications may be made to the preferred embodiment as follows:
Support the use of multiple test transmitters,
Dual band operation with two transmitters at one location,
Multiple transmitters at different locations,
Analyse the effect of selecting multiple new BTS sites.

## Claims

1. A method for assessing traffic density in a mobile cellular telecommunications system, the method comprising:
providing a test transmitter means (8), and moving it to one or more selected sites (S) within existing cells of the system;
the test transmitter means, at the or each site, transmitting test signals to mobile stations (6) within its vicinity,
the mobile stations within the vicinity transmitting first response signals to said test signals, and said mobile stations transmitting second response signals to corresponding test signals from base stations (4, 4N) of associated cells (2, N);
and analysing received first and second response signals for assessing traffic density within the vicinity of the transmitter means.

2. A method according to claim 1, wherein said test transmitter means is arranged to provide a base station of a serving cell for mobile stations in its vicinity, and said associated cells constitute neighbouring cells to the serving cell.

3. A method according to claim 1, wherein said test transmitter means cannot receive transmissions from mobile stations, and the associated cells constitute a serving cell serving the mobile stations within said vicinity, and neighbouring cells to said serving cell, and wherein the test transmitter means is set as a neighbouring cell.

4. A method according to any preceding claim, wherein the response signals consitute reports of received signal strength of the respective test transmitter means/ base station.

5. A method according to any preceding claim, including providing analyser means (14) located in the interface (12) between the base stations of associated cells and a base station controller (10), for recording the response signals.

6. A method according to claim 5, wherein said analyser means provides a file of the response signals for further analysis for each site of the test transmitter means.

7. A method according to any preceding claim, wherein said step of analysing comprises analysing (3.6- 3.8) said received first response signals to determine those first response signals which are greater than a predetermined threshold value, and
comparing(3.9-3.13, 4.3- 4.10) those first response signals which are greater than a predetermined threshold value with the second response signals to determine the value of the first response signals in relation to the second response signals.

8. A method, for assessing traffic density in a mobile cellular telecommunications system, by analysing test results obtained from a test procedure involving a test transmitter (8) making test transmissions, and mobile stations (6) within its vicinity making first response signals to said test transmissions, and second response signals to corresponding transmissions made by the base stations (4, 4N) of associated cells,
received versions of the first response signals constituting a first set of test results and received versions of the second response signals constituting a second set of test results,
said method for analysing test results comprising analysing (3.6- 3.8) said first set of test results to determine those first response signals which are greater than a predetermined threshold value,
and analysing (3.9-3.13, 4.3- 4.10) said second set of test results to compare those first response signals which are greater than a predetermined threshold value with the second response signals to determine the value of the first response signals in relation to the second response signals.

9. A method according to claim 7 or 8, wherein the threshold value comprises the minimum acceptable received signal strength value for MS in said vicinity.

10. A method according to any of claims 7 to 9, wherein said comparing step involves determining which of those first response signals, greater than a predetermined threshold value, are also greater than the corresponding second response signals.

11. A method according to any of claims 7 to 10, wherein said comparing step involves adding a correction factor (3.6) to said first response signals to account for the test transmitter means transmitting at a different power level to said base stations.

12. A method according to any of claims 7 to 11, including, in an initial step (3.1-3.3), locating a predetermined number having the largest values of the first and second response signals, and determining whether a said first response signal is present in said predetermined number.

13. A method according to any of claims 7 to 12, wherein a time of transmission value is obtained by multiplying the number of those first response signals greater than a predetermined threshold value by a time constant representing the interval between said first response signals for a single mobile station, and/or wherein a further time of transmission value is obtained by multiplying the number of those first response signals greater than the corresponding second response signals by a time constant representing the interval between said first response signals for a single mobile station.

14. Apparatus for assessing traffic density in a mobile cellular telecommunications system, comprising:
a test transmitter means (8), movable to one or more selected sites (S) within existing telecommunications cells (2, N) and arranged to transmit test signals to mobile stations (6) within its vicinity, which mobile stations are arranged to transmit first response signals to said test signals;
and means (16) for analysing received first response signals, in addition to received second response signals to corresponding test signals from base stations (4, 4N) of associated cells, for assessing traffic density within the vicinity of the transmitter means.

15. Apparatus according to claim 14, wherein said test transmitter means is such that it cannot receive transmissions from mobile stations, and the associated cells constitute a serving cell serving the mobile stations within said vicinity, and neighbouring cells to said serving cell, wherein the test transmitter means is set as a neighbouring cell.

16. Apparatus according to claim 14 or 15, wherein the response signals consitute reports of received signal strength of the respective test transmitter means/ base station.

17. Apparatus according to any of claims 14 to 16, including analyser means (14) for locating in the interface (10) between the base stations of associated cells and a base station controller(12), for recording the response signals.

18. Apparatus according to any of claims 14 to 17, wherein said means for analysing comprises means (3.6- 3.8) for analysing said first received response signals to determine those first response signals which are greater than a predetermined threshold value, and
means (3.9-3.13, 4.3-4.10) for comparing those first response signals which are greater than a predetermined threshold value with the second response signals to determine the value of the first response signals in relation to the second response signals.

19. Apparatus, for assessing traffic density in a mobile cellular telecommunications system, by analysing test results obtained from a test procedure involving a test transmitter (8) making test transmissions, and mobile stations (6) within its vicinity making first response signals to said test transmissions, and second response signals to corresponding transmissions made by the base stations (4, 4N) of associated cells,
received versions of the first response signals constituting a first set of test results and received versions of the second response signals constituting a second set of test results,
said apparatus comprising means (16, 3.6- 3.8) for analysing said first set of test results to determine those first response signals which are greater than a predetermined threshold value,
and means (16, 3.9 - 3.13, 4.3- 4.10)) for analysing said second set of test results to compare those first response signals which are greater than a predetermined threshold value with the second response signals to determine the value of the first response signals in relation to the second response signals.

20. Apparatus according to claim 18 or 19, wherein the comparing means comprises means for determining which of those first response signals greater than a predetermined threshold value are also greater than the corresponding second response signals.

21. Apparatus according to any of claims 18 to 20, wherein the comparing means includes means (3.6) for adding a correction factor to said first response signals to account for the test transmitter means transmitting at a different power level to said base stations.

22. Apparatus according to any of claims 18 to 21, including means (3.1-3.3) for locating a predetermined number having the largest values of the first and second response signals, and determining whether a said first response signal is present in said predetermined number.

23. Apparatus according to any of claims 18 to 22, including means for obtaining a time of transmission value by multiplying the number of those first response signals greater than a predetermined threshold value by a time constant representing the interval between said first response signals for a single mobile station, and/or including means for obtaining a further time of transmission value by multiplying the number of those first response signals greater than the corresponding second response signals by a time constant representing the interval between said first response signals for a single mobile station.
